# EUROPEAN PATENT SPECIFICATION

(11) **EP 2 298 822 B1**
(45) Date of publication and mention of the grant of the patent: **27.02.2013**
(21) Application number: 09773453.7
(22) Date of filing: 30.06.2009
(51) Int. Cl.: C08F 220/10, C08F 2/44, C08F 283/12

(54) **HARDENING COMPOSITION AND RESULTANT HARDENED MATERIAL**
HÄRTUNGSZUSAMMENSETZUNG UND DARAUS RESULTIERENDES GEHÄRTETES MATERIAL
COMPOSITION DURCISSABLE ET MATÉRIAU DURCI RÉSULTANT

(30) Priority: 03.07.2008 JP 2008174522; 03.09.2008 JP 2008225946
(43) Date of publication of application: 23.03.2011
(73) Proprietor: Showa Denko K.K., Tokyo 105-8518 (JP)
(72) Inventor: YAMAKI, Shigeru, Tokyo 105-8518 (JP); MIYATA, Hideo, Tokyo 105-8518 (JP); MITARAI, Nobuyuki, Tokyo 105-8518 (JP); ISHII, Nobuaki, Tokyo 105-8518 (JP); MUROFUSHI, Katsumi, Tokyo 105-8518 (JP)
(74) Representative: Strehl Schübel-Hopf & Partner
(86) International application number: PCT/JP2009/061903
(87) International publication number: WO 2010/001875

(56) References cited:
- EP-A1- 1 811 517
- EP-A1- 2 295 481
- WO-A1-2008/015999
- JP-A- 2 116 036
- JP-A- 2005 003 772
- JP-A- 2006 249 322
- JP-A- 2008 001 895

## Description

### Technical Field

The present invention relates to a curable composition having a low viscosity and excellent handling properties and a cured product which is obtained by curing the curable composition and which is excellent in transparency, heat resistance, environment resistance and molding processability. The cured product may be used, for example, for an optical lens, an optical disk substrate, a plastic substrate for liquid crystal display elements, a substrate for color filters, a plastic substrate for organic EL display elements, a solar cell substrate, a touch panel, an optical element, an optical waveguide and an LED sealing agent. In particular, the cured product may be preferably used for an optical lens, an optical element, and an optical waveguide.

### Background Art

In general, many glass plates have been used as a substrate for liquid crystal display elements, a substrate for color filters, a substrate for organic EL display elements, a solar cell substrate, a touch panel and the like. However, there have been various problems, for example, a glass plate is liable to be fractured, cannot be bent, and is not suitably used for weight reduction due to its high specific gravity; hence, in recent years, many attempts have been carried out to use a plastic material instead of a glass plate. In addition, in recent years, a plastic material having an excellent heat resistance such as reflow resistance has been desired as an optical lens, an optical element, an optical waveguide and an LED sealing material.

For example, Japanese Unexamined Patent Application Publication No. H10-77321 discloses that a cured member obtained by curing a resin composition composed of an amorphous thermoplastic resin and an active energy-ray curable bis(meth)acrylate by active energy rays is preferably used for an optical lens, an optical disk substrate, a plastic liquid crystal substrate and the like instead of a glass substrate. However, a conventional plastic material as disclosed in this patent document is inferior in heat resistance and has a large contraction when curing is performed. Hence, when applied, for example, to a display element substrate, warpage, deflection, cracks or the like may be disadvantageously developed in its manufacturing process.

As a method to improve the heat resistance and/or to reduce the contraction, in general, a method in which an inorganic filler is added into a resin composition, a method in which an inorganic film is laminated on a substrate, and the like may be mentioned. However, when an inorganic filler is added into a resin composition, there are various problems, for example, the transparency of a cured product (substrate) obtained by curing the resin composition is considerably degraded, the surface smoothness is degraded, the substrate has non-uniformity due to inferior dispersibility of the inorganic filler (silica fine particles), and thereby the substrate is liable to be fractured. In addition, when the inorganic film is laminated, the following problems occur.
(1) The adhesion between the inorganic film and the substrate is inferior.
(2) The inorganic film is peeled off from the substrate, and/or cracks and the like are formed in the substrate. The above problem (2) occurs by such a cause as a large difference between the contraction of the inorganic film and the contraction of the resin composition in curing, the resin composition being formed into the substrate by curing.

Japanese Unexamined Patent Publication Application Nos. H5-209027, H10-231339 and H10-298252 disclose a curable composition which becomes a cured product having excellent transparency and rigidity. In the curable composition, a silica-based condensation polymer obtained by hydrolysis and condensation polymerization of a specific silane compound in a colloidal silica dispersion system is uniformly dispersed in a radical polymerizable vinyl compound such as methyl methacrylate or a bisphenol A-type ethylene oxide-modified (meth)acrylate. However, the cured products obtained from these curable compositions are also insufficient in heat resistance.

In addition, Japanese Patent No. 4008246 discloses a cured product which is formed by cross-linking a composite composition obtained by removing an organic solvent of a composition containing a bifunctional (meth)acrylate having a specific alicyclic structure and a colloidal silica dispersed in the organic solvent. However, according to the invention disclosed in this patent document, the dispersibility of the silica in the composite composition, the suppression of the curing contraction thereof and the molding processability of the cured product are not satisfactory. In addition, although the addition of a silane compound having an alicyclic structure to the composite composition for compensating for the dispersibility of the silica and reducing the viscosity of the composition is also described, the hydrolysis rate of the silane compound is extremely slow. Hence, the method that the silane compound is added to the composition is not economical in view of the manufacturing time, and in addition, has a problem that the effect is hard to be exerted.

Further, in order to apply a plastic material to optical parts such as an optical lens or an optical waveguide instead of a glass plate, the plastic material is desired to have a low water absorption rate, and even if the plastic material absorbs water, the refractive index thereof is desired not to be changed. Furthermore, the change in refractive index caused by the change in temperature is desired to be small.

Japanese Unexamined Patent Publication Application Nos. H5-209027, H10-231339 and H10-298252 and Japanese Patent No. 4008246 described above do not describe the changes in refractive index of the composition and the cured product thereof described in each publication, the change being caused by the change in temperature (change of environment).

### Prior Art Documents

### Patent Documents

Patent Document 1: Japanese Unexamined Patent Application Publication No. H10-77321
Patent Document 2: Japanese Unexamined Patent Application Publication No. H5-209027
Patent Document 3: Japanese Unexamined Patent Application Publication No. H10-231339
Patent Document 4: Japanese Unexamined Patent Application Publication No. H10-298252
Patent Document 5: Japanese Patent No. 4008246

### Summary of the Invention

### Problems to be Solved by the Invention

An object of the present invention is to provide a curable composition which is able to solve the problems of the conventional techniques described above and which is able to form a cured product preferably used for use applications such as an optical lens, an optical disk substrate, a plastic substrate for liquid crystal display elements, a substrate for color filters, a plastic substrate for organic EL display elements, a solar cell substrate, a touch panel, an optical element, an optical waveguide and an LED sealing material.

That is, the object of the present invention is to provide a curable composition which is excellent in handling properties and which is able to form a cured product excellent in transparency, heat resistance, environment resistance (it indicates a low water absorption rate and a small change in refractive index caused by the change of temperature) and molding processability.

### Means for Solving the Problems

Through intensive research carried out by the inventors of the present invention to solve the above problem, it has been found that a curable composition containing silica fine particles which are surface-treated by specific silane compounds, a (meth)acrylate which has at least two ethylenic unsaturated groups and no ring structure, a mono(meth)acrylate which has an ethylenic unsaturated group and an alicyclic structure, and a polymerization initiator has a low viscosity and excellent handling properties. And it has been also found that when the curable composition is cured, a cured product having the following properties is obtained.
(1) The cured product is preferably used for a transparent plate, an optical lens, an optical disk substrate, a plastic substrate for liquid crystal display elements, a substrate for color filters, a plastic substrate for organic EL display elements, a solar cell substrate, a touch panel, an optical element, an optical waveguide, an LED sealing material and the like.
(2) The cured product is excellent in transparency, heat resistance, environment resistance and molding processability.

That is, the essentials of the present invention are as described below.
[1] A curable composition comprising (a) silica fine particles, (b) a (meth)acrylate which has at least two ethylenic unsaturated groups and no ring structure, (c) a (meth)acrylate which has an ethylenic unsaturated group and an alicyclic structure, and (d) a polymerization initiator, wherein the silica fine particles (a) are surface-treated with a silane compound (e) represented by the following general formula (1) and a silane compound (f) represented by the following general formula (2):

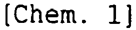

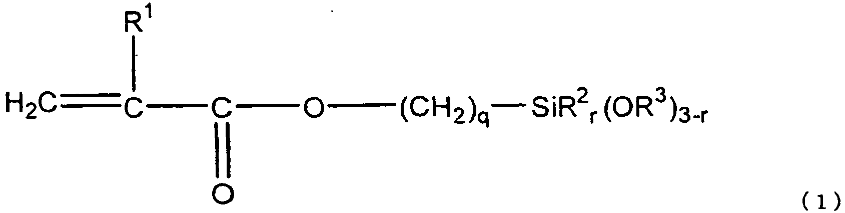

(In the formula (1), R¹ represents a hydrogen atom or a methyl group, R² represents an alkyl group having 1 to 3 carbon atoms or a phenyl group, R³ represents a hydrogen atom or a hydrocarbon group having 1 to 10 carbon atoms, q is an integer of 1 to 6, and r is an integer of 0 to 2.);

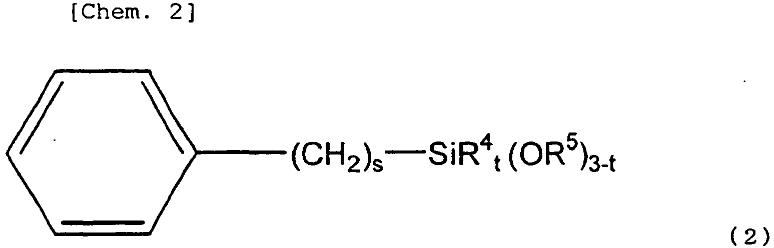

(In the formula (2), R⁴ represents an alkyl group having 1 to 3 carbon atoms or a phenyl group, R⁵ represents a hydrogen atom or a hydrocarbon group having 1 to 10 carbon atoms, s is an integer of 0 to 6, and t is an integer of 0 to 2.).

[2] The curable composition as described in [1], wherein the (meth)acrylate (b) is a (meth)acrylate which has three ethylenic unsaturated groups and no alicyclic structure.

[3] The curable composition as described in [1] or [2], the silica fine particles (a) are surface-treated with 5 to 25 parts by mass of the silane compound (e) with respect to 100 parts by mass of the silica fine particles (a) and 5 to 25 parts by mass of the silane compound (f) with respect to 100 parts by mass of the silica fine particles (a).

[4] The curable composition as described in any one of [1] to [3], wherein the glass transition temperature of a homopolymer of the (meth)acrylate (b) and the glass transition temperature of a homopolymer of the above (meth)acrylate (c) are both 150°C or more.

[5] The curable composition as described in any one of [1] to [4], wherein the viscosity of the curable composition is 30 to 300 mPa·s.
[6] A cured product obtained by curing the curable composition as described in any one of [1] to [5].

[7] An optical lens comprising the cured product as described in [6].

### Advantages of the Invention

According to the present invention, a curable composition is provided which is capable of forming a cured product excellent in transparency, heat resistance, environment resistance and molding processability and which is excellent in handling properties, and furthermore, a cured product of the curable composition is also provided.

### Description of Embodiments

Hereinafter, the present invention will be described in detail.

### [Curable Composition]

A curable composition of the present invention comprises (a) silica fine particles, (b) a (meth)acrylate which has at least two ethylenic unsaturated groups and no ring structure (hereinafter, also simply referred to as "(meth)acrylate (b)", (c) a (meth)acrylate which has an ethylenic unsaturated group and an alicyclic structure (hereinafter, also simply referred to as "(meth)acrylate (c)"), and (d) a polymerization initiator. The silica fine particles (a) are surface-treated with specific silane compounds. Hereinafter, the respective constituent components mentioned above will be described. In the embodiments, the (meth)acrylate indicates a methacrylate and/or an acrylate.

### <(a) Silica Fine Particles>

As the silica fine particles (a) used in the present invention, ones having an average particle diameter of 1 to 100 nm are preferably used. When the average particle diameter is less than 1 nm, since the viscosity of a prepared curable composition is increased, the content of the silica fine particles (a) in the curable composition is restricted and the dispersibility in the curable composition is degraded. As a result, in a cured product obtained by curing the curable composition (hereinafter, simply referred to as "cured product"), sufficient transparency and heat resistance are not likely to be achieved. In addition, when the average particle diameter is more than 100 nm, the transparency of the cured product may be degraded in some cases.

From the viewpoint of the balance between the viscosity of the curable composition and the transparency of the cured product, the average particle diameter of the silica fine particles (a) is more preferably 1 to 50 nm, still more preferably 5 to 50 nm, and most preferably 5 to 40 nm. The average particle diameter of the silica fine particles (a) may be obtained by the steps of observing silica fine particles by a high resolution transmission type electron microscope (H-9000 manufactured by Hitachi Ltd.), arbitrarily selecting 100 silica particle images from the fine particle images thus observed, and obtaining the number average particle diameter by a known image-data statistical processing method.

In the present invention, in order to increase the amount of the silica fine particles (a) filled into the cured product, silica fine particles having different average particle diameters may also be used in a mixture. In addition, as the silica fine particles (a), porous silica sol, or a composite metal oxide of silicon with aluminum, magnesium, zinc or the like may also be used.

The content of the silica fine particles (a) in the curable composition is preferably 20 to 80% by mass in the form of surface-treated silica fine particles and is more preferably 40 to 60% by mass from the viewpoint of the balance between the viscosity of the curable composition and the heat resistance and environment resistance of the cured product. When the content is in this range, the fluidity of the curable composition and the dispersibility of the silica fine particles (a) therein are excellent, and hence by using such curable composition, a cured product having sufficient strength, heat resistance and environment resistance can be easily manufactured.

In addition, as the silica fine particles (a), silica fine particles dispersed in an organic solvent are preferably used from the viewpoint of the dispersibility thereof in the curable composition. As the organic solvent, a solvent which dissolves the organic components (the (meth)acrylate (b), the (meth)acrylate (c) and the like, which will be described later) contained in the curable composition is preferably used.

As the organic solvent, for example, alcohols, ketones, esters, and glycol ethers may be mentioned. From the viewpoint of how to easily remove the organic solvent from the mixed liquid of the silica fine particles (a), the (meth)acrylate (b) and the (meth)acrylate (c) in a solvent removing step which will be described later, organic solvents such as alcohols including methanol, ethanol, isopropyl alcohol, butyl alcohol and n-propyl alcohol and ketones including methyl ethyl ketone and methyl isobutyl ketone, are preferable.

Among them, isopropyl alcohol is particularly preferable. When the silica fine particles (a) dispersed in isopropyl alcohol are used, the viscosity of the curable composition after the solvent removal is low as compared to that in the case in which another solvent is used, and a curable composition having a low viscosity can be stably prepared.

Silica fine particles dispersed in an organic solvent as described above can be manufactured by a conventionally known method and is also commercially available, for example, as Snowtex IPA-ST (trade name, manufactured by Nissan Chemical Industries Ltd.). When silica fine particles dispersed in an organic solvent are used as the silica fine particles (a), the content of the silica fine particles (a) in the curable composition of the present invention represents the content of the silica fine particles themselves contained in the composition.

In addition, the silica fine particles (a) used for the present invention are surface-treated with a silane compound (e) and a silane compound (f). Hereinafter, each of these silane compounds will be described.

### <(e) Silane Compound>

The silane compound (e) is represented by the following general formula (1).

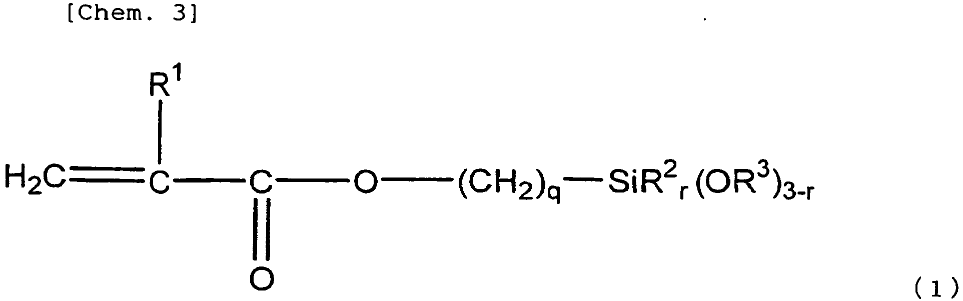

In the above formula (1), R¹ represents a hydrogen atom or a methyl group, R² represents an alkyl group having 1 to 3 carbon atoms or a phenyl group, R³ represents a hydrogen atom or a hydrocarbon group having 1 to 10 carbon atoms, q is an integer of 1 to 6, and r is an integer of 0 to 2.

When r is 2, two R² may be the same or different from each other, and when r is one or less, plural R³ may be the same or different from each other.
From the viewpoint of the reduction in viscosity of the curable composition and the storage stability thereof, desirable R² is a methyl group, desirable R³ is an alkyl group having 1 to 3 carbon atoms, more desirable R³ is a methyl group, desirable q is 3, and desirable r is 0.

The silane compound (e) is used for reducing the viscosity of the curable composition and improving the dispersion stability of the silica fine particles (a) therein by a reaction with the (meth)acrylate (b) which will be described later, and further, for reducing the curing contraction when the curable composition is cured and imparting the molding processability to the cured product. That is, when the silica fine particles (a) are not surface-treated with the silane compound (e), it is not preferable since the viscosity of the curable composition is increased, the curing contraction in curing is increased, the cured product is fragile, and cracks are formed on the cured product.

As the silane compound (e), for example, there may be mentioned γ-acryloxypropyldimethylmethoxysilane,
γ-acryloxypropylmethyldimethoxysilane, γ-acryloxypropyldiethylmethoxysilane,
γ-acryloxypropylethyldimethoxysilane, γ-acryloxypropyltrimethoxysilane,
γ-acryloxypropyldimethylethoxysilane, γ-acryloxypropylmethyldiethoxysilane,
γ-acryloxypropyldiethylethoxysilane, γ-acryloxypropylethyldiethoxysilane,
γ-acryloxypropyltriethoxysilane, γ-methacryloxypropyldimethylmethoxysilane,
γ-methacryloxypropylmethyldimethoxysilane, γ-methacryloxypropyldiethylmethoxysilane,
γ-methacryloxypropylethyldimethoxysilane, γ-methacryloxypropyltrimethoxysilane,
γ-methacryloxypropyldimethylethoxysilane, γ-methacryloxypropylmethyldiethoxysilane, γ-methacryloxypropyldiethylethoxysilane, γ-methacryloxypropylethyldiethoxysilane, and
γ-methacryloxypropyltriethoxysilane.

From the viewpoint of the prevention of agglomeration of the silica fine particles (a) in the curable composition, and the reduction in viscosity and improvement in storage stability of the curable composition,
γ-acryloxypropyldimethylmethoxysilane, γ-acryloxypropylmethyldimethoxysilane,
γ-methacryloxypropyldimethylmethoxysilane, γ-methacryloxypropylmethyldimethoxysilane,
γ-acryloxypropyltrimethoxysilane and γ-methacryloxypropyltrimethoxysilane are preferable, and γ-acryloxypropyltrimethoxysilane is more preferable. In addition, these can be used in combination of two or more kinds thereof.

In addition, the silane compound (e) can be manufactured by a known method and is also commercially available.
The amount of the silane compound (e) used for the surface treatment of the silica fine particles (a) is, with respect to 100 parts by mass thereof, generally 5 to 25 parts by mass, preferably 10 to 20 parts by mass, and more preferably 12 to 18 parts by mass. When the amount of the silane compound (e) is less than 5 parts by mass, the viscosity of the curable composition is increased, the dispersibility of the silica fine particles (a) in the curable composition is degraded, and as a result, gellation may occur in some cases. When the amount is more than 25 parts by mass, the silica fine particles (a) may be agglomerated in some cases. In addition, when silica fine particles dispersed in an organic solvent are used as the silica fine particles (a), the mass of the silica fine particles (a) indicates the mass of only the silica fine particles themselves dispersed in the organic solvent. The surface treatment of the silica fine particles (a) will be described later.

When a large amount of acrylates (an acrylate (b) and an acrylate (c) which will be described later) is contained in the curable composition, a silane compound having an acryl group, that is, a silane compound represented by the general formula (1) in which R¹ is a hydrogen atom, is preferably used as the silane compound (e). On the other hand, when a large amount of methacrylates (a methacrylate (b) and a methacrylate (c) which will be described later) is contained in the curable composition, a silane compound having a methacryl group, that is, a silane compound represented by the general formula (1) in which R¹ is a methyl group, is preferably used as the silane compound (e). In these cases, a curing reaction easily occurs when the curable composition of the present invention is cured.

### <(f) Silane Compound>

The silane compound (f) used in the present invention is represented by the following general formula (2).

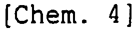

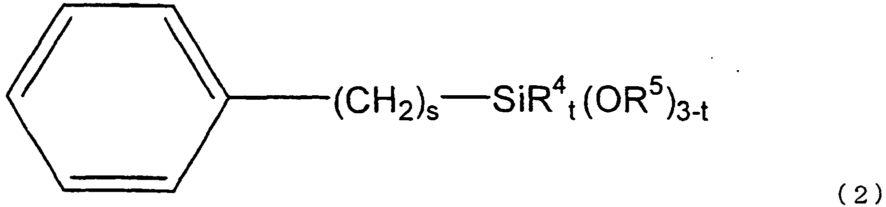

In the above formula (2), R⁴ represents an alkyl group having 1 to 3 carbon atoms or a phenyl group, R⁵ represents a hydrogen atom or a hydrocarbon group having 1 to 10 carbon atoms, s is an integer of 0 to 6, and t is an integer of 0 to 2. As long as the effects of the present invention are not deteriorated, a substituent may be bonded to the phenyl group.

When t is 2, two R⁴ may be the same or different from each other, and when t is one or less, plural R⁵ may be the same or different from each other.
From the viewpoint of the reduction in viscosity of the curable composition and the storage stability thereof, desirable R⁴ is a methyl group, desirable R⁵ is an alkyl group having 1 to 3 carbon atoms, more desirable R⁵ is a methyl group, desirable s is 0 or 1, and desirable t is 0.

The following effects will be obtained when the silane compound (f) reacts with the silica fine particles (a).
(1) Hydrophobic properties are imparted to the surfaces of the silica fine particles (a).
(2) The dispersibility of the silica fine particles (a) in the organic solvent is improved.
(3) The viscosity of the curable composition is decreased due to good compatibility with the (meth)acrylate (c) which will be described later.
(4) The storage stability of the curable composition is improved, and at the same time, the water absorption rate thereof is decreased.

As the silane compound (f), for example, there may be mentioned phenyldimethylmethoxysilane,
phenylmethyldimethoxysilane, phenyldiethylmethoxysilane, phenylethyldimethoxysilane, phenyltrimethoxysilane, phenyldimethylethoxysilane, phenylmethyldiethoxysilane, phenyldiethylethoxysilane, phenylethyldiethoxysilane, phenyltriethoxysilane, benzyldimethylmethoxysilane, benzylmethyldimethoxysilane, benzyldiethylmethoxysilane, benzylethyldimethoxysilane, benzyltrimethoxysilane, benzyldimethylethoxysilane, benzylmethyldiethoxysilane, benzyldiethylethoxysilane, benzylethyldiethoxysilane and benzyltriethoxysilane.

From the viewpoint of the reduction of the viscosity and improvement in storage stability of the curable composition, and the improvement in environment resistance including the reduction in water absorption rate thereof,
phenyldimethylmethoxysilane, phenylmethyldimethoxysilane, phenyldiethylmethoxysilane, phenylethyldimethoxysilane and phenyltrimethoxysilane are preferable, and
phenyltrimethoxysilane is more preferable. In addition, these silane compounds may be used in combination of two or more kinds thereof.

Further, the silane compound (f) can be manufactured by a known method and is also commercially available.
The amount of the silane compound (f) used for the surface treatment of the silica fine particles (a) is, generally 5 to 25 parts by mass, preferably 10 to 20 parts by mass, and more preferably 12 to 18 parts by mass, with respect to 100 parts by mass of the silica fine particles (a). When the amount of the silane compound (f) is less than 5 parts by mass, the viscosity of the curable composition is increased, gellation may occur, and the heat resistance of the cured product may be degraded in some cases. In addition, when the above amount is more than 25 parts by mass, the silica fine particles (a) may be agglomerated in some cases. When silica fine particles dispersed in an organic solvent is used as the silica fine particles (a), the mass of the silica fine particles (a) represents the mass of only the silica fine particles themselves dispersed in the organic solvent. In addition, the surface treatment of the silica fine particles (a) will be described later.

Furthermore, when the total amount of the silane compound (e) and the silane compound (f) is more than 50 parts by mass with respect to 100 parts by mass of the silica fine particles (a), since the amount of the treatment agents is excessively large, agglomeration and gellation may occur in some cases due to a reaction between silica particles during the surface treatment of the silica fine particles (a).

### <(b) (Meth)acrylate>

The (meth)acrylate (b) used in the present invention which has at least two ethylenic unsaturated groups and which has no alicyclic structure and no ring structure such as an aromatic ring or a heterocyclic ring, preferably has 2 to 6 ethylenic unsaturated groups. As the (meth)acrylate (b), for example, there may be mentioned trimethylolpropane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, trimethylolpropane trioxyethyl(meth)acrylate and allyl(meth)acrylate.

When the curable composition of the present invention containing at least one of these mentioned above is cured, a cured product having excellent heat resistance is formed.
In view of the heat resistance of the cured product, among these mentioned above, a (meth)acrylate having three ethylenic unsaturated groups is preferable, and a (meth)acrylate which is formed into a homopolymer having a glass transition temperature of 150°C or more is further preferable. In particular, trimethylolpropane tri(meth)acrylate which is formed into a homopolymer having a glass transition temperature of 200°C or more and which has a relatively small curing contraction among polyfunctional (meth)acrylates, is most preferable.

The glass transition temperature of the homopolymer is measured by the following method. After 1 part by mass of diphenyl-(2,4,6-trimethylbenzoyl)phosphine oxide (trade name: Speedcure TPO-L; manufactured by Nihon SiberHegner K.K.) as a photopolymerization initiator is dissolved in 100 parts by mass of the (meth)acrylate (b), a solution obtained thereby is coated on a glass substrate (50 mm x 50 mm) so that a cured film has a thickness of 100 µm. The coating film is cured by exposure at 3 J/cm² using an exposure device into which an ultra-high pressure mercury lamp is introduced. By using the cured film, the glass transition temperature of the homopolymer can be obtained from the peak temperature of a tanδ value in a first temperature increase which is measured in a tensile mode, at a temperature increasing rate of 2°C/min in a temperature range of 20°C to 300 °C, and at a frequency of 1 Hz using DMS6100 (manufactured by Seiko Electronics Co., Ltd.).

The amount of the (meth)acrylate (b) used in the present invention is preferably 20 to 500 parts by mass with respect to 100 parts by mass of the silica fine particles (a) before the surface treatment. From the viewpoint of the viscosity of the curable composition, the dispersion stability of the silica fine particles (a) in the curable composition and the heat resistance of the cured product, the amount is more preferably 30 to 300 parts by mass and is still more preferably 50 to 200 parts by mass. When the above amount is less than 20 parts by mass, the viscosity of the curable composition is increased, and gellation may occur in some cases. When the above amount is more than 500 parts by mass, the contraction is increased when the curable composition is cured, and warpage or cracks of the cured product may be caused in some cases. In addition, when silica fine particles dispersed in an organic solvent are used as the silica fine particles (a), the mass of the silica fine particles (a) indicates the mass of only the silica fine particles themselves dispersed in the organic solvent.

### <(c) (Meth)acrylate>

The (meth)acrylate (c) used in the present invention which has an ethylenic unsaturated group and also which has an alicyclic structure is used in order to impart the heat resistance and the environment resistance to the cured product and to reduce the contraction when curing is performed. The (meth)acrylate (c) generally has 1 to 4 ethylenic unsaturated groups.

Among them, a (meth)acrylate which has one ethylenic unsaturated group and an alicyclic structure is preferably used, and as the (meth)acrylate mentioned above, for example, there may be mentioned cycloalkyl (meth)acrylates such as cyclohexyl (meth)acrylate, 4-butylcyclohexyl (meth)acrylate, dicyclopentanyl (meth)acrylate, dicyclopentenyl (meth)acrylate, dicyclopentadienyl (meth)acrylate, bornyl (meth)acrylate, isobornyl (meth)acrylate, tricyclodecanyl (meth)acrylate, tricyclodecane dimethanol diacrylate and adamantyl (meth)acrylate.

From the viewpoint of the heat resistance of the cured product, as the (meth)acrylate (c), a (meth)acrylate which is formed into a homopolymer having a glass transition temperature of 150°C or more is preferably used. The measuring method of the glass transition temperature of the homopolymer is the same as described above.

From the viewpoint of the transparency, heat resistance and environment resistance of the cured product, among the (meth)acrylates exemplified as above, dicyclopentanyl (meth)acrylate and adamantyl (meth)acrylate are preferable, and adamantyl (meth)acrylate which is formed into a homopolymer having a high glass transition temperature is most preferable.

Among structures in each of which carbon atoms are bonded to form a ring, the alicyclic structure is a structure other than an aromatic ring structure.
The amount of the (meth)acrylate (c) used in the present invention is preferably 5 to 400 parts by mass with respect to 100 parts by mass of the silica fine particles (a) before the surface treatment. From the viewpoint of the viscosity of the curable composition, the dispersion stability of the silica fine particles (a) in the curable composition and the heat resistance of the cured product, the above amount is more preferably 10 to 200 parts by mass and is still more preferably 20 to 100 parts by mass. When the above amount is less than 5 parts by mass, the viscosity of the curable composition is increased, and gellation may occur in some cases. When the above amount is more than 400 parts by mass, cracks of the cured product may be caused, and the heat resistance and environment resistance of the cured product may be degraded in some cases. In addition, when silica fine particles dispersed in an organic solvent are used as the silica fine particles (a), the mass of the silica fine particles (a) indicates the mass of only the silica fine particles themselves dispersed in the organic solvent.

### <(d) Polymerization Initiator>

As the polymerization initiator (d) used in the present invention, a photopolymerization initiator and a thermal polymerization initiator, each of which generates radicals, may be mentioned.

As the photopolymerization initiator, for example, benzophenone, benzoin methyl ether, benzoin propyl ether, diethoxyacetophenone, 1-hydroxyphenyl phenyl ketone, 2,6-dimethylbenzoyldiphenylphosphine oxide, 2,4,6-trimethylbenzoyldiphenylphosphine oxide and diphenyl-(2,4,6-trimethylbenzoyl)phosphine oxide may be mentioned. Two or more kinds of these photopolymerization initiators may also be used in combination.

The content of the photopolymerization initiator in the curable composition may be an amount which appropriately cures the curable composition and is, with respect to 100 parts by mass of the total amount of the (meth)acrylate (b), the methacrylate (c) and a reactive diluent which will be described later, preferably 0.01 to 10 parts by mass, more preferably 0.02 to 5 parts by mass, and still more preferably 0.1 to 2 parts by mass. When the addition amount of the photopolymerization initiator is too large, problems may arise in some cases, for example, the storage stability of the curable composition is degraded, coloring occurs, and since the cross-linking rapidly proceeds in producing the cured product by cross-linking, cracks and the like are caused in the curing. In addition, when the addition amount of the photopolymerization initiator is too small, the curable composition may not be fully cured in some cases.

As the thermal polymerization initiator, for example, benzoyl peroxide, diisopropyl peroxy carbonate and t-butyl peroxy-(2-ethylhexanoate) may be mentioned.
The content of the thermal polymerization initiator in the curable composition is, with respect to 100 parts by mass of the curable composition, preferably 2 parts by mass or less and more preferably 0.1 to 2 parts by mass.

In addition, as long as the properties such as the viscosity of the composition and the transparency and heat resistance of the cured product are not degraded, the curable composition of the present invention may contain, if necessary, a leveling agent, an antioxidant, an ultraviolet ray absorber, a solvent, a pigment, another filler such as an inorganic filler, a reactive diluent, other modifiers and the like.

As the leveling agent, for example, a polyether-modified dimethylpolysiloxane copolymer, a polyester-modified dimethylpolysiloxane copolymer, a polyether-modified methylalkylpolysiloxane copolymer, an aralkyl-modified methylalkylpolysiloxane copolymer and a polyether-modified methylalkylpolysiloxane copolymer may be mentioned.

As the filler or the pigment, for example, calcium carbonate, talc, mica, clay, Aerosil (registered trademark) and the like, barium sulfate, aluminum hydroxide, zinc stearate, zinc flower, red iron oxide and an azo pigment may be mentioned.

The viscosity of the curable composition of the present invention containing the various components described above measured by a B-type viscometer DV-II+Pro (manufactured by Brookfield Inc.) at 25°C and 60 rpm using a rotor No. 63 is generally 30 to 300 mPa·s. The composition has extremely low viscosity even without containing a solvent, and has good handling properties. What bring about this are high compatibility of the silica fine particles (a) with the (meth)acrylates (b) and (c) and high dispersion stability of the silica fine particles (a) in the (meth)acrylates (b) and (c), both of which are obtained by the above surface treatment of the silica fine particles (a).

### <Method for Manufacturing Curable Composition>

The curable composition of the present invention can be manufactured, for example, by sequentially performing a step (Step 1) of performing a surface treatment on a colloidal silica (silica fine particles (a)) dispersed in an organic solvent with the silane compounds (e) and (f), a step (Step 2) of adding the (meth)acrylates (b) and (c) to the surface-treated silica fine particles (a), followed by uniform mixing, a step (Step 3) of removing water and the organic solvent by distillation from a uniformly mixed liquid containing the silica fine particles (a) and the (meth)acrylates (b) and (c) obtained in the Step 2, and a step (Step 4) of adding the polymerization initiator (d) to the composition obtained by the distillation for solvent removal performed in the Step 3, followed by uniform mixing to yield the curable composition. Hereinafter, the individual steps will be described.

### (Step 1)

In the Step 1, the surface treatment of the silica fine particles (a) is carried out by using the silane compounds (e) and (f). For the surface treatment, while the silica fine particles (a) charged in a reactor are stirred, the silane compounds (e) and (f) are added thereto and are mixed by stirring. Furthermore, water and a catalyst necessary for carrying out hydrolysis of the silane compounds are added and stirred to perform hydrolysis of the silane compounds, and condensation polymerization of the hydrolysates of the silane compounds is performed on the surfaces of the silica fine particles (a). As the silica fine particles (a), silica fine particles dispersed in an organic solvent are preferably used as described above.

Disappearance of the silane compounds by the hydrolysis can be confirmed by a gas chromatography. The remaining amount of the silane compounds can be measured on an internal reference method by a gas chromatography (Model 6850, manufactured by Agilent Technologies Inc.) and a hydrogen flame ionization detector using a nonpolar column DB-1 (manufactured by J&W Scientific) at a He flow rate of 1.2 cc/min, which is used as a carrier gas, and at a temperature increasing rate of 10°C/min within a temperature range of 50 to 300°C. Therefore, the disappearance of the silane compounds by the hydrolysis can be confirmed.

In addition, as described above, the amount of the silane compound (e) used when the silica fine particles (a) is surface-treated is, with respect to 100 parts by mass of the silica fine particles (a), generally 5 to 25 parts by mass, preferably 10 to 20 parts by mass, and more preferably 12 to 18 parts by mass. Further, the amount of the silane compound (f) is, with respect to 100 parts by mass of the silica fine particles (a), generally 5 to 25 parts by mass, preferably 10 to 20 parts by mass, and more preferably 12 to 18 parts by mass.

The lower limit of the amount of water necessary to carry out the hydrolysis reaction is one time the total number of moles of an alkoxy group and a hydroxy group bonded to the silane compounds (e) and (f), and the upper limit is ten times the total number described above. When the amount of water is excessively small, the hydrolysis rate is extremely decreased, and as a result, the economical efficiency may be degraded, or the surface treatment may not be sufficiently advanced in some cases. Conversely, when the amount of water is excessively large, the silica fine particles (a) may be gelled in some cases.

When the hydrolysis reaction is performed, a catalyst for hydrolysis reactions is generally used. As specific examples of the catalyst, there may be mentioned inorganic acids such as hydrochloric acid, acetic acid, sulfuric acid and phosphoric acid;
organic acids such as formic acid, propionic acid, oxalic acid, para-toluenesulfonic acid, benzoic acid, phthalic acid and maleic acid;
alkaline catalysts such as potassium hydroxide, sodium hydroxide, calcium hydroxide and ammonia; organic metals; metal alkoxides;
organotin compounds such as dibutyltin dilaurate, dibutyltin dioctylate and dibutyltin diacetate;
metal chelate compounds such as aluminum
tris(acetylacetonate),
titanium tetrakis(acetylacetonate), titanium bis(butoxy)bis(acetylacetonate),
titanium bis(isopropoxy)bis(acetylacetonate), zirconium bis(butoxy)bis(acetylacetonate) and zirconium
bis(isopropoxy)bis(acetylacetonate); and
boron compounds such as boron butoxide and boric acid.

Among them, since dissolution in water and sufficient hydrolysis rate are obtained, hydrochloric acid, acetic acid, maleic acid and the boron compounds are preferably used. These catalysts may also be used alone or in combination of two or more kinds thereof.

In Step 1, when the hydrolysis reaction of the silane compounds (e) and (f) is performed, although a water-insoluble catalyst may be used, a water-soluble catalyst is preferably used. In the case in which a water-soluble catalyst for hydrolysis reactions is used, it is preferable that the water-soluble catalyst is dissolved in an appropriate amount of water and is then added to the reaction system, since the catalyst can be uniformly dispersed.

Although the addition amount of the catalyst used for the hydrolysis reaction is not particularly limited, the amount with respect to 100 parts by mass of the silica fine particles (a) is generally 0.1 to 10 parts by mass and preferably 0.5 to 5 parts by mass. In addition, when silica fine particles dispersed in an organic solvent are used as the silica fine particles (a), the mass of the silica fine particles (a) indicates the mass of only the silica fine particles themselves dispersed in the organic solvent.

Although the reaction temperature of the hydrolysis reaction is not particularly limited, it is generally in a range of 10 to 80°C and preferably in a range of 20 to 50°C. When the reaction temperature is too low, the hydrolysis rate is extremely decreased, and as a result, the economical efficiency may be degraded or the surface treatment may not be sufficiently advanced in some cases. When the reaction temperature is too high, a gellation reaction is liable to occur.

Further, although the reaction time for the hydrolysis reaction is not particularly limited, it is generally in a range of 10 minutes to 48 hours and preferably in a range of 30 minutes to 24 hours.

In addition, although the surface treatment by the silane compound (e) and that by the silane compound (f) in Step 1 may be sequentially performed, they are preferably performed at the same time in consideration of the simplification and efficiency of the reaction process.

### (Step 2)

In Step 2, a method for mixing the surface-treated silica particles (a) and the (meth)acrylates (b) and (c) is not particularly limited. As the mixing method, for example, there may be mentioned a method in which mixing is performed under room temperature or heating conditions by a mixing device such as a mixer, a ball mill or a triple roll mill and a method in which while stirring is continuously performed in the reactor used in Step 1, the (meth)acrylates (b) and (c) are added and mixed together.

### (Step 3)

In Step 3, in order to perform distillation for solvent removal (hereinafter, collectively called solvent removal) of an organic solvent and water from a uniformly mixed liquid of the silica fine particles (a) and the (meth)acrylates (b) and (c), heating is preferably performed under reduced-pressure conditions.

The temperature is preferably maintained at 20 to 100°C, and in view of the balance between the prevention of agglomeration and gellation and the solvent removal rate, the temperature is more preferably 30 to 70°C and further preferably 30 to 50°C. When the temperature is excessively increased, the fluidity of the curable composition may be extremely degraded or the curable composition may be gelled in some cases.

The degree of vacuum when the pressure is reduced is generally 10 to 4,000 kPa, and in order to maintain the balance between the solvent removal rate and the prevention of agglomeration and gellation, the degree is more preferably 10 to 1,000 kPa and most preferably 10 to 500 kPa. When the value of the degree of vacuum is too large, the solvent removal rate is extremely decreased and the economical efficiency is degraded.

The composition after the solvent removal preferably contains substantially no solvent. The meaning of "substantially" in this context indicates that when the cured product is actually obtained using the curable composition of the present invention, a solvent removal step is not necessary to be performed again. In particular, the remaining amount of the organic solvent and water in the curable composition is preferably 1 percent by mass or less, preferably 0.5 percent by mass or less, and further preferably 0.1 percent by mass or less.

In Step 3, before the solvent removal is performed, 0.1 parts by mass or less of a polymerization inhibitor may be added with respect to 100 parts by mass of the composition processed by the solvent removal. The polymerization inhibitor is used in order to prevent a polymerization reaction of the components contained in the composition during or after the solvent removal step or during the storage of the curable composition. As the polymerization inhibitor, for example, hydroquinone, hydroquinone monomethyl ether, benzoquinone, p-t-butyl catechol, 2,6-di-t-butyl-4-methylphenol may be mentioned. These may be used alone or in combination of two or more kinds thereof.

After the uniform mixture of the silica fine particles (a) and the (meth)acrylates (b) and (c) obtained through Step 2 is charged into an exclusive device, Step 3 may be performed. Or when Step 2 is performed in the reactor used in Step 1, the Step may be performed in the reactor continuously from Step 2.

### (Step 4)

In Step 4, a method in which the polymerization initiator (d) is added to the composition processed by the solvent removal in Step 3 and uniform mixing is then performed is not particularly limited. As the uniform mixing method, for example, there may be mentioned a method in which mixing is performed at room temperature by a mixing device such as a mixer, a ball mill or a triple roll mill, and a method in which while stirring is continuously performed in the reactor used in Steps 1 to 3, the polymerization initiator (d) is added and mixed.

Furthermore, if necessary, filtration may also be performed for the curable composition obtained after the polymerization initiator (d) is added and mixed. This filtration is performed to remove foreign substances such as impurities in the curable composition. Although the filtration method is not particularly limited, a pressure filtration method using a filters such as a cartridge type or a membrane type having a pressure filter pore diameter of 1.0 µm, is preferable.

The curable composition of the present invention can be manufactured through the respective steps described above. Since the silica fine particles (a) which are the component of the curable composition of the present invention are treated by the specific silane compounds, the composition has a low viscosity without containing a solvent and has excellent handling properties.

### [Cured Product]

The curable composition of the present invention become a cured product by curing which may be used as a member such as an optical lens, an optical disk substrate, a plastic substrate for liquid crystal display elements, a substrate for color filters, a plastic substrate for organic EL display elements, a solar cell substrate, a touch panel, an optical element, an optical waveguide and an LED sealing material.

### <Process for Manufacturing Cured Product>

The cured product is obtained by curing the curable composition of the present invention. As a curing method, for example, a method in which ethylenic unsaturated groups of the (meth)acrylates (b) and (c) are cross-linked by irradiation with active energy rays and a method in which the ethylenic unsaturated groups are thermally polymerized by applying heat may be mentioned. These methods may also be used in combination.

When the curable composition is cured by active energy rays such as ultraviolet rays, a photopolymerization initiator is added into the curable composition in Step 4 described above.
When the curable composition is cured by applying heat thereto, a thermal polymerization initiator is added into the curable composition in Step 4 described above.

The cured product of the present invention can be obtained, for example, in such a way that after the curable composition of the present invention is coated on a substrate such as a glass plate, a plastic plate, a metal plate or a silicon wafer to form a coating film, the curable composition is irradiated with active energy rays or heated. For the curing, both of the irradiation of active energy rays and the application of heat may be performed.

As a coating method of the curable composition, for example, there may be mentioned coating using a bar coater, an applicator, a die coater, a spin coater, a spray coater, a curtain coater or a roll coater; coating by a screen printing; and coating by dipping.

The coating amount of the curable composition of the present invention on the substrate is not particularly limited and may be appropriately adjusted in accordance with the purpose. From the viewpoint of the moldability, the amount is set such that the thickness of the coating film obtained after the curing treatment by the irradiation with active energy rays and/or the application of heat is preferably 1 to 200 µm and more preferably 5 to 100 µm.

As the active energy rays used for the curing, electron rays or light in a wavelength range of from ultraviolet rays to infrared rays is preferable.
As a light source of the active energy rays, for example, an ultra-high pressure mercury light source or a metal halide light source may be used for ultraviolet rays, a metal halide light source or a halogen light source may be used for visible rays, and a halogen light source may be used for infrared rays. Besides, light sources such as a laser and an LED may also be used.

Although the irradiation amount of the active energy rays is appropriately determined in accordance with the type of light source, the thickness of the coating film and the like, it may be appropriately determined so that the reaction rates of the ethylenic unsaturated groups of the (meth)acrylates (b) and (c) are each preferably 80% or more and more preferably 90% or more.

In addition, after the curing is performed by irradiation with the active energy rays, if necessary, the curing may be further advanced by performing a heat treatment (annealing treatment). The heating temperature in that case is preferably in a range of 80 to 200°C. The heating time is preferably in a range of 10 minutes to 60 minutes.

When thermal polymerization is performed by a heat treatment for curing the curable composition of the present invention, the heating temperature is preferably in a range of 80 to 200°C and more preferably in a range of 100 to 150°C. When the heating temperature is less than 80°C, the heating time must be increased, and as a result, the economical efficiency is liable to be decreased. When the heating temperature is more than 200°C, a temperature increasing time and a temperature decreasing time are increased as well as an increase in energy cost, and as a result, the economical efficiency is liable to be decreased.

Although the heating time is appropriately determined in accordance with the heating temperature, the thickness of the coating film and the like, it may be appropriately determined so that the reaction rates of the ethylenic unsaturated groups of the (meth)acrylates (b) and (c) are each preferably 80% or more and more preferably 90% or more.

After the curing of the curable composition is performed by thermal polymerization, if necessary, the curing may be further advanced by performing a heat treatment (annealing treatment). The heating temperature in that case is preferably in a range of 150 to 200°C. The heating time is preferably in a range of 5 minutes to 60 minutes.

### <Cured Product>

Since being excellent in transparency, heat resistance, environment resistance and molding processability, the cured product of the present invention may be preferably used, for example, as an optical lens, a plastic substrate for liquid crystal display elements, a substrate for color filters, a plastic substrate for organic EL display elements, a solar cell substrate, a touch panel, an optical element, an optical waveguide and an LED sealing agent material.

The refractive index of the cured product may be appropriately selected in accordance with its application. In addition, since the cured product of the present invention is excellent in heat resistance, the amount of change in refractive index before and after a heat treatment is performed three times at 270°C for 1 minute is preferably 0.005 or less, more preferably 0.003 or less, and further preferably 0.001 or less. Since the efficiency of utilization of light will be changed when the amount of change in refractive index before and after the heat treatment is performed three times at 270°C for 1 minute is more than 0.005, it is not preferable for the application in which the light efficiency is important.

Since the cured product of the present invention is excellent in heat resistance, a 5% weight loss temperature when heating is performed in a nitrogen atmosphere is generally 330°C or more and some products the weight loss temperature of which is 350°C or more and further, 380°C or more can be obtained. When the 5% weight loss temperature when heating is performed is less than 330°C, for example, if the cured product is used for an active-matrix display element substrate, warpage or deflection may occur in its manufacturing process, and problems such as occurrence of cracks may also arise in some cases.

Since being obtained by curing the curable composition containing the (meth)acrylates (b) and (c), the homopolymer of each of which has a high glass transition temperature, the cured product of the present invention is excellent in heat resistance.

In addition; the cured product of the present invention has a high glass transition temperature. The glass transition temperature of the cured product is obtained from the peak temperature of the loss tangent, or the tanδ value, which is measured at a frequency of 1 Hz using a dynamic-viscoelasticity-measurement method and is generally 200°C or more and preferably 230°C or more. When the glass transition temperature is less than 200°C, if the cured product is used for an active-matrix display element substrate, warpage or deflection may occur in the manufacturing process, and problems such as occurrence of cracks, may also arise in some cases.

Since the cured product of the present invention is excellent in transparency, a light transmittance of 85% or more is obtained at a wavelength of 400 nm regarding a cured film having a thickness of 100 µm, and in addition, the amount of change in transmittance at a wavelength of 400 nm before and after a heat treatment is performed three times at 270°C for 1 minute is usually 3% or less. Since the efficiency of utilization of light will be decreased when the light transmittance at a wavelength of 400 nm is 85% or less, it is not preferable for the application in which the light efficiency is important. Further, when the amount of change in transmittance at a wavelength of 400 nm before and after the heat treatment is performed three times at 270°C for 1 minute is more than 3%, if the cured product is used for an active-matrix display element substrate, a coloring problem may arise in its manufacturing process in some cases.

The water absorption rate of the cured product of the present invention when being immersed in water for 24 hours is, with respect to 100% by mass of the cured product, 2 percent by mass or less, preferably 1.5% by mass or less, and more preferably 1.0% by mass or less.

The amount of change in refractive index of the cured product of the present invention before and after being immersed in water for 24 hours is 0.001 or less, preferably 0.0008 or less, and more preferably 0.0005 or less. When the amount of change in refractive index is more than 0,001, for example, if the cured product of the present invention is applied for an optical lens or an optical waveguide, the focal distance of light is changed when water absorption occurs under usage conditions, and as a result, the image accuracy or the propagation efficiency of light is unfavorably degraded.

In addition, the amount of change in refractive index of the cured product of the present invention before and after being stored at 85°C and 85% saturated humidity for 50 hours is 0.001 or less, preferably 0.0008 or less, and more preferably 0.0005 or less. When the amount of change in refractive index is more than 0,001, for example, if the cured product of the present invention is applied for an optical lens or an optical waveguide, the focal distance of light is changed when water absorption occurs under usage conditions, and as a result, the image accuracy or the propagation efficiency of light is unfavorably degraded. As a material conventionally used for an optical lens and the like, a poly(methyl methacrylate) may be mentioned. The amount of change in refractive index thereof before and after the storage at 85°C and 85% saturated humidity for 50 hours is as large as 0.0015 (1.4912→1.4897). The reason for this is believed that the cured film swells due to the water absorption under the high humidity/high temperature conditions.

Regarding the cured product of the present invention, the absolute value of the temperature dependence coefficient of the refractive index within a temperature of 25°C to 55°C is 6.0x 10⁻⁵/°C or less, preferably 5.0x10⁻⁵/°C or less, more preferably 4.0x10⁻⁵/°C or less. When the absolute value of the temperature dependence coefficient of the refractive index is more than 6.0x10⁻⁵/°C, for example, if the cured product of the present invention is applied for an optical lens or an optical waveguide, the focal distance of light is changed when the temperature is changed under usage conditions, and as a result, the image accuracy or the propagation efficiency of light is unfavorably degraded. As a material conventionally used for an optical lens and the like, a poly(methyl methacrylate) may be mentioned. The absolute value of the temperature dependence coefficient of the refractive index thereof is 10.5x 10⁻⁵/°C, and the change in refractive index with the change in temperature is large. In addition, the temperature dependence coefficient of the refractive index indicates the slope which is obtained in such a way that after the refractive index is measured every 5°C within a measurement temperature range of 25°C to 55°C using a refractometer, the refractive index is plotted against the measurement temperature.

### EXAMPLES

Hereinafter, although the present invention will be described in detail with reference to Examples, the present invention is not limited to the following Examples as long as it does not depart from the scope of the present invention.

### [Preparation of Curable Composition]

### (Example 1)

After 100 parts by mass of isopropyl alcohol-dispersed colloidal silica (silica content: 30% by mass, average particle diameter: 10 to 20 nm, trade name: Snowtex IPA-ST manufactured by Nissan Chemical Industries Ltd.) was charged in a separable flask, 4.5 parts by mass of γ-methacryloxypropyltrimethoxysilane and 4.5 parts by mass of phenyltrimethoxysilane were added into this separable flask, followed by stirring and mixing. 2.9 Parts by mass of a HCl solution at a concentration of 0.1825% by mass was added and stirred at 20°C for 24 hours, so that a surface treatment of the silica fine particles was performed.

In addition, the disappearance of γ-methacryloxypropyltrimethoxysilane and phenyltrimethoxysilane by the hydrolysis was confirmed by a gas chromatography (Model 6850, manufactured by Agilent Technologies Inc.). The measurement was performed on the internal reference method by a hydrogen flame ionization detector using a nonpolar column DB-1 (manufactured by J&W Scientific) at a He flow rate of 1.2 cc/min, which was used as a carrier gas, and at a temperature increasing rate of 10°C/min within a temperature range of 50 to 300°C. Phenyltrimethoxysilane and γ-methacryloxypropyltrimethoxysilane disappeared 8 hours after the HCl solution was added.

Next, 22.5 parts by mass of trimethylolpropane triacrylate (trade name: Biscoat #295 manufactured by Osaka Organic Chemical Industry, Ltd., Tg>250°C) and 22.5 parts by mass of adamantyl methacrylate (trade name: ADMA manufactured by Osaka Organic Chemical Industry, Ltd., Tg: 180°C) were added to a dispersion liquid of the silica fine particles processed by the surface treatment described above, followed by uniform mixing. Then, heating under reduced pressure was carried out at 40°C and 100 kPa while the mixed solution was stirred, so that volatile components were removed. The removal amount of the volatile components was 72.0 parts by mass.

Next, 0.845 parts by mass of diphenyl-(2,4,6-trimethylbenzoyl)phosphine oxide (trade name: Speedcure TPO-L manufactured by Nihon SiberHegner K.K.) as a photopolymerization initiator was dissolved in 84.9 parts by mass of a mother liquor obtained by removal of the volatile components, and a solution obtained thereby was processed by pressure filtration (pressure: 0.2 MPa) using a membrane filter (porous diameter: 1.0 µm), so that a curable composition 1 was obtained.

The viscosity of the curable composition 1 thus obtained was 74 mPa·s. In addition, the viscosity was measured using a B type viscometer DV-II+Pro (manufactured by Brookfield Inc.) at 25°C and 60 rpm using a rotor No. 63.

### (Example 2)

After 100 parts by mass of isopropyl alcohol-dispersed colloidal silica (silica content: 30% by mass, average particle diameter: 10 to 20 nm, trade name: Snowtex IPA-ST manufactured by Nissan Chemical Industries Ltd.) was charged in a separable flask, 5.4 parts by mass of γ-methacryloxypropyltrimethoxysilane and 3.6 parts by mass of phenyltrimethoxysilane were added into the separable flask, followed by stirring and mixing. 2.9 Parts by mass of a HCl solution at a concentration of 0.1825% by mass was added and stirred at 20°C for 24 hours, so that a surface treatment of the silica fine particles was performed.

Phenyltrimethoxysilane and γ-methacryloxypropyltrimethoxysilane disappeared 8 hours after the HCl solution was added.
Next, 37.5 parts by mass of trimethylolpropane triacrylate (trade name: Biscoat #295 manufactured by Osaka Organic Chemical Industry, Ltd., Tg>250°C) and 7.5 parts by mass of adamantyl methacrylate (trade name: ADMA manufactured by Osaka Organic Chemical Industry, Ltd., Tg: 180°C) were added to the silica fine particles processed by the surface treatment, followed by uniform mixing. Then, heating under reduced pressure was carried out at 40°C and 100 kPa while the mixed solution was stirred, so that volatile components were removed. The removal amount of the volatile components was 72.4 parts by mass.

0.845 Parts by mass of t-butyl peroxy-(2-ethylhexanoate) (trade name: Perbutyl O manufactured by NOF Corporation) as a thermal polymerization initiator was dissolved in 84.5 parts by mass of a mother liquor obtained by removal of the volatile components, and a solution obtained thereby was processed by pressure filtration (pressure: 0.2 MPa) using a membrane filter (porous diameter: 1.0 µm), so that a curable composition 2 was obtained.

The solvent concentration in the curable composition 2 thus obtained was measured on the internal reference method by a gas chromatography (Model 6850, manufactured by Agilent Technologies Inc.) and a hydrogen flame ionization detector using a nonpolar column DB-1 (manufactured by J&W Scientific) at a He flow rate of 1.2 cc/min, which was used as a carrier gas, and at a temperature increasing rate of 10°C/min within a temperature range of 50 to 300°C.

As a result, the isopropyl alcohol concentration was 0.82% by mass, the methanol concentration was 0.03% by mass, and the water concentration was 0.10% by mass.
In addition, the viscosity of the curable composition 2 thus obtained was 231 mPa·s.

### (Comparative Example 1)

Except that phenyltrimethoxysilane was not used and the amount of the HCl solution at a concentration of 0.1825% by mass was changed to 1.3 parts by mass, a curable composition 3 was obtained in the same manner as in Example 1.

γ-Methacryloxypropyltrimethoxysilane disappeared 8 hours after the HCl solution was added. The viscosity of the curable composition 3 thus obtained was 104 mPa·s.

### (Comparative Example 2)

Except that γ-methacryloxypropyltrimethoxysilane was not used and the amount of the HCl solution at a concentration of 0.1825% by mass was changed to 1.6 parts by mass, a curable composition 4 was obtained in the same manner as in Example 1.

Phenyltrimethoxysilane disappeared 8 hours after the HCl solution was added. The viscosity of the curable composition 4 thus obtained was 114 mPa·s.

### (Comparative Example 3)

Except that 4.5 parts by mass of cyclohexyltrimethoxysilane was used instead of using phenyltrimethoxysilane and the amount of the HCl solution at a concentration of 0.1825% by mass was changed to 3.1 parts by mass, a curable composition 5 was obtained in the same manner as in Example 1.

Although γ-methacryloxypropyltrimethoxysilane disappeared 8 hours after the HCl solution was added, cyclohexyltrimethoxysilane did not disappear 48 hours after the HCl solution was added. The viscosity of the curable composition 5 thus obtained was 90 mPa·s.

### (Comparative Example 4)

Except that 4.5 parts by mass of cyclohexyltrimethoxysilane was used instead of using γ-methacryloxypropyltrimethoxysilane and phenyltrimethoxysilane, and the amount of the HCl solution at a concentration of 0.1825% by mass was changed to 1.7 parts by mass, a curable composition 6 was obtained in the same manner as in Example 1.

Cyclohexyltrimethoxysilane did not disappear 48 hours after the HCl solution was added. The viscosity of the curable composition 6 thus obtained was 120 mPa·s.

### (Comparative Example 5)

A curable composition 7 was obtained in the same manner as in Example 1 except that γ-methacryloxypropyltrimethoxysilane and phenyltrimethoxysilane were not used. The curable composition 7 thus obtained was gelled.

### (Comparative Example 6)

Except that 45 parts by mass of dicyclopentadienyl diacrylate (trade name: Light Acrylate DCP-A manufactured by Kyoeisha Chemical Co., Ltd.) was used instead of using trimethylolpropane triacrylate and adamantyl methacrylate, a curable composition 8 was obtained in the same manner as in Comparative Example 4.

Cyclohexyltrimethoxysilane did not disappear 48 hours after the HCl solution was added. The viscosity of the curable composition 8 thus obtained was 360 mPa·s.

### (Comparative Example 7)

Except that 45 parts by mass of dicyclopentadienyl diacrylate (trade name: Light Acrylate DCP-A manufactured by Kyoeisha Chemical Co., Ltd.) was used instead of using trimethylolpropane triacrylate and adamantyl methacrylate, a curable composition 9 was obtained in the same manner as in Comparative Example 5. The curable composition 9 thus obtained was gelled.

The compositions of the respective components used for preparation of the above curable compositions are shown in the following Table 1.

**[Table 1]**

| | | EXAMPLE 1 | EXAMPLE 2 | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 | COMPARATIVE EXAMPLE 7 |
|---|---|---|---|---|---|---|---|---|---|---|
| Composition | Isopropyl alcohol-dispersed colloidal silica | 100 | 100 | 100 | 100 | 100 | 100 | 100 | 100 | 100 |
| | γ-methacryloxypropyltrimethoxysilane (MPS) | 4.5 | 5.4 | 4.5 | 0 | 4.5 | 0 | 0 | 0 | 0 |
| | Phenyltrimethoxysilane (PHS) | 4.5 | 3.6 | 0 | 4.5 | 0 | 0 | 0 | 0 | 0 |
| | Cyclohexyltrimethoxysilane (CHS) | 0 | 0 | 0 | 0 | 4.5 | 4.5 | 0 | 4.5 | 0 |
| | HCl solution at a concentration of 0.1825 mass% | 2.9 | 2.9 | 1.3 | 1.6 | 3.1 | 1.7 | 0 | 1.7 | 0 |
| | Trimethylolpropane triacrylate | 22.5 | 37.5 | 22.5 | 22.5 | 22.5 | 22.5 | 22.5 | 0 | 0 |
| | Adamantyl methacrylate | 22.5 | 7.5 | 22.5 | 22.5 | 22.5 | 22.5 | 22.5 | 0 | 0 |
| | Dicyclopentadienyl diacrylate | 0 | 0 | 0 | 0 | 0 | 0 | 0 | 45 | 45 |
| | Diphenyl-(2,4,6-trimethylbenzoyl)phosphine oxide | 0.845 | 0 | 0.845 | 0.845 | 0.845 | 0.845 | 0.845 | 0.845 | 0.845 |
| | t-butyl peroxy-(2-ethylhexanoate) | 0 | 0.845 | 0 | 0 | 0 | 0 | 0 | 0 | 0 |

### [Preparation of Cured Film]

### <Active Energy-Ray Curing>

In Example 1 and Comparative Examples, the respective curable compositions were coated on separate glass substrates (50 mm x 50 mm) so that a cured film had a thickness of 100 µm, and the coating film was cured by exposure at 3 J/cm² using an exposure device into which an ultra-high pressure mercury lamp was introduced. Then, an annealing treatment was carried out at 180°C for 30 minutes.

### <Heat Curing>

The curable composition 2 of Example 2 was coated on a glass substrate (50 mm x 50 mm) so that a cured film had a thickness of 100 µm, and the coating film was cured by a heat treatment at 140°C for 10 minutes. Then, an annealing treatment was carried out at 180°C for 30 minutes.

### [Performance Evaluation Method]

### <Molding Processability>

The degree of processability in which the cured film is processed without occurrence of fractures or cracks when the cured film is peeled off from the glass substrate was evaluated based on the following indexes.

A: Process (peeling) can be performed without occurrence of fractures and cracks.
B: Although fractures are not caused, cracks are partially caused.
C: Fractures are caused, and processability (peeling property) is inferior.

### <Transmittance>

The transmittances (T%) of light at a wavelength of 400 nm were measured before and after the cured film thus obtained was heat-treated three times at 270°C for 1 minute in accordance with JIS-K7105 using a spectrophotometer (UV3100 manufactured by JASCO Corp.). The results are shown in Table 2. The larger the transmittance value is and the smaller the change in transmittance before and after the heat treatment is, the better the cured film is.

### <Refractive Index>

Before and after the cured film thus obtained was heat-treated three times at 270°C for 1 minute, the refractive index was measured at a measurement temperature of 25°C using a multi-wavelength Abbe refractometer DR-M2 (manufactured by Atago. Co. Ltd.). The results are shown in Table 2. The smaller the change in refractive index before and after the heat treatment is, the better the cured film is.

### <Glass Transition Temperature Tg>

The tanδ value of the cured film thus obtained in a first temperature increase was measured in a tensile mode, at a temperature increasing rate of 2°C/minute within a temperature range of 20°C to 300°C, and at a frequency of 1 Hz using DMS6100 (manufactured by Seiko Electronics Co., Ltd.). The peak temperature of the tanδ value was regarded as the glass transition temperature. The results are shown in Table 2. The higher the glass transition temperature is, the better heat resistance the cured film has.

### <5% Weight Loss Temperature>

The 5% weight loss temperature of the cured film thus obtained was obtained by treating it under a nitrogen atmosphere and at a temperature increasing rate of 10°C/minute within a temperature range of 20°C to 500°C using a TG-DTA (manufactured by Seiko Electronics Co., Ltd.). The results are shown in Table 2. The higher the 5% weight loss temperature is, the better heat resistance the cured film has.

### <Water Absorption Rate and Change in Refractive Index before and after Water Immersion >

After the cured film obtained in each Example was immersed in pure water for 24 hours, the water absorption rate was measured based on the change in weight before and after the immersion. At the same time, the refractive indexes were also measured at a measurement temperature of 25°C using a multi-wavelength Abbe refractometer DR-M2 (manufactured by Atago. Co. Ltd.). The results are shown in Table 3. The lower the water absorption rate is the smaller the change in refractive index is, the better the environment resistance is.

### <Change in Refractive Index after Storage at 85°C and 85% Saturated Humidity for 50 Hours>

The cured film obtained in each Example was stored in a thermo-hygrostat at 85°C and 85% saturated humidity for 50 hours, and the refractive indexes before and after the storage were measured at a measurement temperature of 25°C using a multi-wavelength Abbe refractometer DR-M2 (manufactured by Atago. Co. Ltd.). The results are shown in Table 3. The smaller the change in refractive index is, the better environment resistance the cured film has.

### <Temperature Dependence Coefficient of Refractive Index>

After the refractive index of the cured film obtained in each Example was measured every 5°C within a measurement temperature range of 25°C to 55°C using a multi-wavelength Abbe refractometer DR-M2 (manufactured by Atago. Co. Ltd.), the slope obtained by plotting the refractive index against the temperature was regarded as the temperature dependence coefficient of the refractive index. The absolute value thereof was calculated. The results are shown in Table 3. The smaller the value is, the better environment resistance the cured film has.

**[Table 2]**

| | | EXAMPLE 1 | EXAMPLE 2 | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 | COMPARATIVE EXAMPLE 7 |
|---|---|---|---|---|---|---|---|---|---|---|
| Viscosity of composition mPa·s | | 74 | 231 | 104 | 114 | 90 | 120 | gelled | 360 | gelled |
| Curing method | | Photo curing | Thermal curing | Photo curing | Photo curing | Photo curing | Photo curing | - | Photo curing | - |
| Molding processability | | A | A | A | B | A | C | - | C | - |
| Transmittance of cured product at 400 nm (Before heat treatment) | | 89 | 89 | 89 | 82 | 90 | - | - | - | - |
| | After treatment performed 3 times at 270°C for 1 minute | 88 | 90 | 85 | 78 | 85 | - | - | - | - |
| Refractive index of cured product (Before heat treatment) | | 1.4988 | 1.4884 | - | - | - | - | - | - | - |
| | After treatment performed 3 times at 270°C for 1 minute | 1.4996 | 1.4986 | - | - | - | - | - | - | - |
| 5% Weight loss temperature of cured product °C | | 338 | 397 | - | - | - | - | - | - | - |
| Tg of cured product °C | | 211 | >230 | - | - | - | - | - | - | - |

**[Table 3]**

| | EXAMPLE 1 | EXAMPLE 2 |
|---|---|---|
| Water absorption rate of cured product after water immersion for 24 hours % | 0.88 | 1.26 |
| Refractive index of cured product before water immersion | 1.4988 | 1.4884 |
| Refractive index of cured product after water immersion for 24 hours | 1.4984 | 1.4981 |
| Refractive index of cured product before storage at 85°C and 85% saturated humidity | 1.4988 | 1.4884 |
| Refractive index of cured product after storage at 85°C and 85% saturated humidity for 50 hours | 1.4987 | 1.4983 |
| Absolute value of temperature dependence coefficient of refractive index of cured product °C⁻¹ | 4.1 × 10⁻⁵ | 4.1 × 10⁻⁵ |

As shown in Table 2, in Examples 1 and 2, since the curable compositions had low viscosities, the handling properties thereof were excellent. Furthermore, molded cured films of the curable compositions were not only excellent in molding processability but also excellent in transparency and heat resistance.

In Comparative Examples 5 and 7, the dispersibility of the silica fine particles in the curable compositions was seriously inferior, and gellation occurred when the cured products were prepared.
In Comparative Examples 4 and 6, the molding processability was inferior. In addition, in Comparative Example 2, since the molding processability was insufficient and the dispersibility of the silica fine particles was also inferior, the transmittance at 400 nm was low, and the transparency was inferior.

In Comparative Examples 1 and 3, although the molding processability was superior, since the dispersibility of the silica fine particles in the curable composition was still insufficient, the heat resistance of the cured product was inferior, and the decrease in transmittance of 400 nm by a heat treatment at 270°C for 3 minutes was large.

The cured films of Example 1 and Example 2 had water absorption rates of 0.88% and 1.26%, respectively, after the water immersion for 24 hours. The refractive indexes were not substantially changed before and after the water absorption; hence the cured films were each excellent in environment resistance.

In addition, the absolute values of the temperature dependence coefficient of the refractive indexes of the molded cured product of Example 1 and that of Example 2 were 4.1x10⁻⁵/°C and 4.5x10⁻⁵/°C, respectively. The absolute value of the temperature dependence coefficient of the refractive index of a poly(methyl methacrylate) which has been conventionally used for an optical lens is 10.5x10⁻⁵/°C. The amount of change in refractive index of the molded cured film of the present invention over the temperature is half or less than that of a poly(methyl methacrylate). That is, the refractive index of the cured product of the present invention has a small dependence on the temperature, and hence it has an excellent environment resistance.

### Industrial Applicability

The curable composition of the present invention containing silica fine particles which are surface-treated with two specific types of silane compounds, two specific types of (meth)acrylates and a polymerization initiator has a low viscosity and excellent handling properties.

In addition, when the curable composition is cured, a cured product is obtained which is excellent in transparency, heat resistance and molding processability and which can be preferably used, for example, for a transparent plate, an optical lens, an optical disk substrate, a plastic substrate for liquid crystal display elements, a substrate for color filters, a plastic substrate for organic EL display elements, a solar cell substrate, a touch panel, an optical element, an optical waveguide and an LED sealing material.

Furthermore, according to the present invention, a cured product which has a low water absorption rate, a small change in refractive index over the change in temperature, and an excellent environment resistance and which can be preferably used for an optical lens, an optical waveguide and the like is provided.

## Claims

1. A curable composition comprising:
(a) silica fine particles;
(b) a (meth)acrylate having at least two ethylenic unsaturated groups and no ring structure;
(c) a (meth)acrylate having one ethylenic unsaturated group and an alicyclic structure; and
(d) a polymerization initiator,
wherein the silica fine particles (a) are surface-treated with a silane compound (e) represented by the following general formula (1) and a silane compound (f) represented by the following general formula (2): 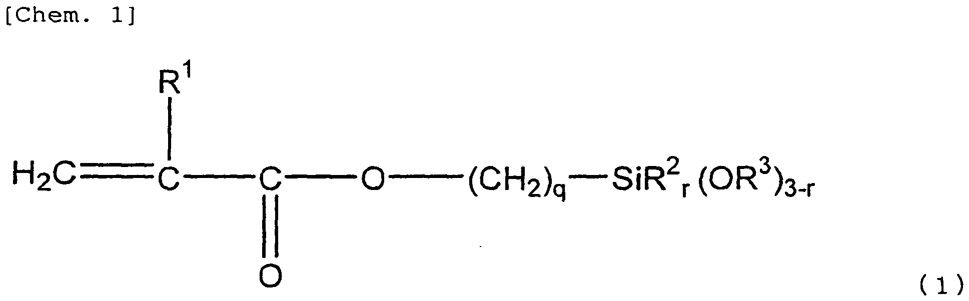 (in the formula (1), R¹ represents a hydrogen atom or a methyl group, R² represents an alkyl group having 1 to 3 carbon atoms or a phenyl group, R³ represents a hydrogen atom or a hydrocarbon group having 1 to 10 carbon atoms, q is an integer of 1 to 6, and r is an integer of 0 to 2.); 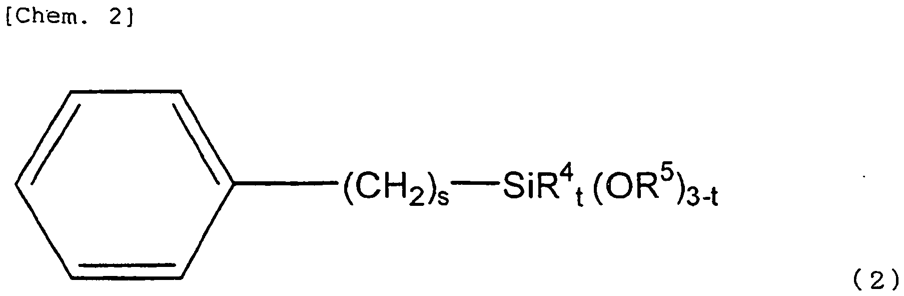 (in the formula (2), R⁴ represents an alkyl group having 1 to 3 carbon atoms or a phenyl group, R⁵ represents a hydrogen atom or a hydrocarbon group having 1 to 10 carbon atoms, s is an integer of 0 to 6, and t is an integer of 0 to 2.).

2. The curable composition according to claim 1,
wherein the (meth)acrylate (b) is a (meth)acrylate having three ethylenic unsaturated groups and no ring structure.

3. The curable composition according to Claim 1 or 2,
wherein the silica fine particles (a) are surface-treated with
5 to 25 parts by mass of the silane compound (e) with respect to 100 parts by mass of the silica fine particles (a) and
5 to 25 parts by mass of the silane compound (f) with respect to 100 parts by mass of the silica fine particles (a).

4. The curable composition according to any one of Claims 1 to 3,
wherein the glass transition temperature of a homopolymer of the (meth)acrylate (b) and the glass transition temperature of a homopolymer of the (meth)acrylate (c) are both 150°C or more.

5. The curable composition according to any one of Claims 1 to 4,
wherein the viscosity of the curable composition is 30 to 300 mPa·s.

6. A cured product obtained by curing the curable composition according to any one of Claims 1 to 5.

7. An optical lens comprising the cured product according to claim 6.

## Patentansprüche

1. Härtbare Zusammensetzung, enthaltend:
(a) feine Siliciumdioxidteilchen;
(b) ein (Meth)acrylat mit mindestens zwei ethylenisch ungesättigten Gruppen und keiner Ringstruktur;
(c) ein (Meth)acrylat mit einer ethylenisch ungesättigten Gruppe und einer alicyclischen Struktur; und
(d) einen Polymerisationsinitiator,
worin die feinen Siliciumdioxidteilchen (a) mit einer Silanverbindung (e) der folgenden allgemeinen Formel (1) und einer Silanverbindung (f) der folgenden allgemeinen Formel (2) oberflächenbehandelt sind: 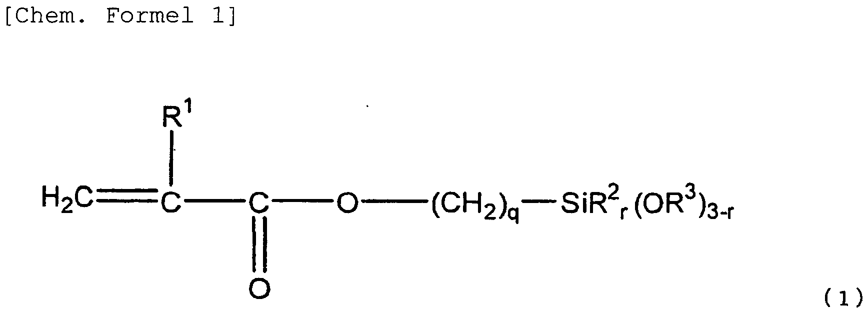 worin in der Formel (1) R¹ ein Wasserstoffatom oder eine Methylgruppe darstellt, R² eine Alkylgruppe mit 1 bis 3 Kohlenstoffatomen oder eine Phenylgruppe darstellt, R³ ein Wasserstoffatom oder eine Kohlenwasserstoffgruppe mit 1 bis 10 Kohlenstoffatomen darstellt, q eine ganze Zahl von 1 bis 6 ist, und r eine ganze Zahl von 0 bis 2 ist; 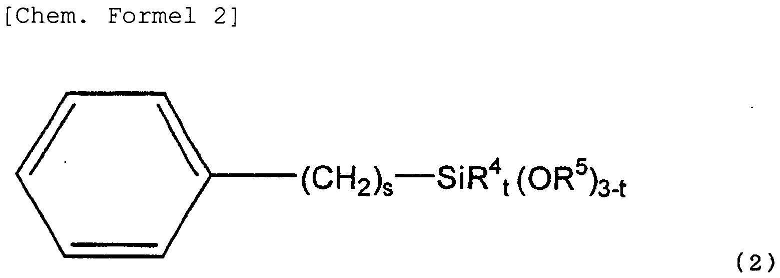 worin in der Formel (2) R⁴ eine Alkylgruppe mit 1 bis 3 Kohlenstoffatomen oder eine Phenylgruppe darstellt, R⁵ ein Wasserstoffatom oder eine Kohlenwasserstoffgruppe mit 1 bis 10 Kohlenstoffatomen darstellt, s eine ganze Zahl von 0 bis 6 ist, und t eine ganze Zahl von 0 bis 2 ist.

2. Härtbare Zusammensetzung nach Anspruch 1,
worin das (Meth)acrylat (b) ein (Meth)acrylat mit drei ethylenisch ungesättigten Gruppen und keiner Ringstruktur ist.

3. Härtbare Zusammensetzung nach Anspruch 1 oder 2,
worin die feinen Siliciumdioxidteilchen (a) oberflächenbehandelt sind mit:
5 bis 25 Massenteilen der Silanverbindung (e) in Bezug auf 100 Massenteile der feinen Siliciumdioxidteilchen (a) und
5 bis 25 Massenteilen der Silanverbindung (f) in Bezug auf 100 Massenteile der feinen Siliciumdioxidteilchen (a).

4. Härtbare Zusammensetzung nach einem der Ansprüche 1 bis 3,
worin die Glasübergangstemperatur eines Homopolymers des (Meth)acrylats (b) und die Glasübergangstemperatur eines Homopolymers des (Meth)acrylats (c) beide 150°C oder mehr sind.

5. Härtbare Zusammensetzung nach einem der Ansprüche 1 bis 4,
worin die Viskosität der härtbaren Zusammensetzung 30 bis 300 mPa·s ist.

6. Gehärtetes Produkt, erhältlich durch Härten der härtbaren Zusammensetzung nach einem der Ansprüche 1 bis 5.

7. Optische Linse, welche das gehärtete Produkt nach Anspruch 6 enthält.

## Revendications

1. Composition durcissable comprenant :
(a) de fines particules de silice ;
(b) un (méth)acrylate ayant au moins deux groupes insaturés éthyléniques et pas de structure cyclique ;
(c) un (méth)acrylate ayant un groupe insaturé éthylénique et une structure alicyclique ; et
(d) un initiateur de polymérisation,
où les fines particules de silice (a) sont traitées en surface avec un composé silane (e) représenté par la formule générale (1) suivante et un composé silane (f) représenté par la formule générale (2) suivante : 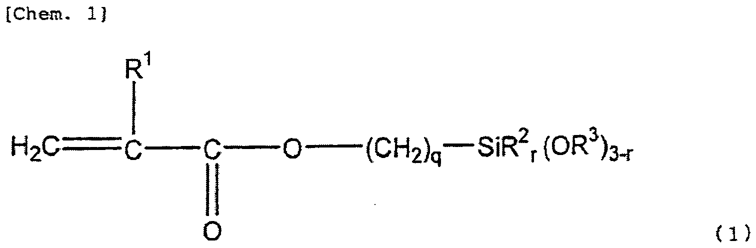 (dans la formule (1) R¹ représente un atome d'hydrogène ou un groupe méthyle, R² représente un groupe alkyle ayant 1 à 3 atomes de carbone ou un groupe phényle, R³ représente un atome d'hydrogène ou un groupe hydrocarboné ayant 1 à 10 atomes de carbone, q est un entier de 1 à 6 et r est un entier de 0 à 2.) ; 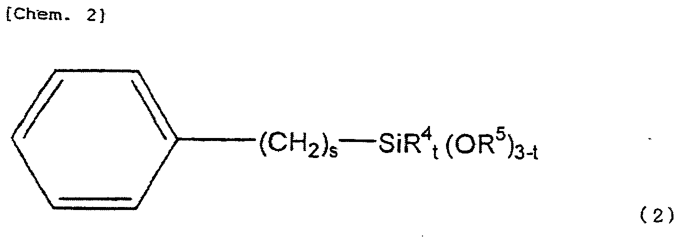 (dans la formule (2), R⁴ représente un groupe alkyle ayant 1 à 3 atomes de carbone ou un groupe phényle, R⁵ représente un atome d'hydrogène ou un groupe hydrocarboné ayant 1 à 10 atomes de carbone, s est un entier de 0 à 6 et t est un entier de 0 à 2.).

2. Composition durcissable selon la revendication 1, où le (méth)acrylate (b) est un (méth)acrylate ayant trois groupes insaturés éthyléniques et pas de structure cyclique.

3. Composition durcissable selon la revendication 1 ou 2, où les fines particules de silice (a) sont traitées en surface avec
5 à 25 parties en masse du composé silane (e) pour 100 parties en masse des fines particules de silice (a) et
5 à 25 parties en masse du composé silane (f) pour 100 parties en masse des fines particules de silice (a).

4. Composition durcissable selon l'une quelconque des revendications 1 à 3
où la température de transition vitreuse d'un homopolymère du (méth)acrylate (b) et la température de transition vitreuse d'un homopolymère du (méth)acrylate (c) sont l'une et l'autre 150°C ou plus.

5. Composition durcissable selon l'une quelconque des revendications 1 à 4
où la viscosité de la composition durcissable est 30 à 300 mPa.s.

6. Produit durci obtenu par durcissement de la composition durcissable selon l'une quelconque des revendications 1 à 5.

7. Lentille optique comprenant le produit durci selon la revendication 6.
